# EUROPEAN PATENT APPLICATION

(11) **EP 2 418 825 A1**
(43) Date of publication of application: **15.02.2012**
(21) Application number: 10774506.9
(22) Date of filing: 25.02.2010
(51) Int. Cl.: H04L 29/08

(54) **METHOD AND SYSTEM FOR GENERATING OPEN TELECOMMUNICATION SERVICE BASED ON INTERNET**

(30) Priority: 14.05.2009 CN 200910106962
(71) Applicant: ZTE Corporation, Shenzhen, Guangdong 518057 (CN)
(72) Inventor: LV, Huawei, Shenzhen Guangdong 518057 (CN); YAN, Quanwen, Shenzhen Guangdong 518057 (CN)
(74) Representative: Wilson Gunn
(86) International application number: PCT/CN2010/070757
(87) International publication number: WO 2010/130165

(57) **Abstract**

The present invention discloses a system and method for generating an open telecommunication service based on Internet, comprising an operating interface and a running container, wherein the operating interface is used for receiving a service from the Internet in a human-computer interaction mode and providing a running mode of a background system for a client, and the running container arranged in the background system is used for generating a telecommunication service by the service from the operating interface, which comprises a service access module, a service generation module and a service release module. The system and method for generating the open telecommunication service based on Internet provided by the present invention have a simple program and high flexibility, and users can directly access or find out service through a human-computer interaction interface and generate the needed value-added telecommunication service in the system, so the service generation efficiency and flexibility are effectively improved without the complex and tedious operations of professionals.

## Description

### TECHNICAL FIELD

The present invention relates to the telecommunication field, in particular to a system and method for generating open telecommunication service based on Internet.

### BACKGROUND

With the fast changing development of Internet technology, it is very common that users communicate with each other at client over Internet, and some emerging services, such as social network, video network and intelligent search, have been appearing in public with the wide application of convergence technology, artificial intelligence, grid computing and open platform in the Internet field. If the wide, free and convenient service channel of Internet is employed in the field of telecommunication service, that is the telecommunication value-added service is implemented by merging the capabilities of the Internet and telecommunication, so that the telecommunication network will provide faster, more convenient services with more diversity for users and the user experience and freedom will be improved.

However, technically, there are some difficulties to merge the rich and strong service generating capabilities of the Internet with the telecommunication capabilities. Although the introduction of Intelligent Network (IN) separates the service logic from the network technology of the telecommunication field to some extent, only few professional developers can create services on the conventional IN due to the complexity of service creating on the conventional IN, and this process is usually achieved by the cooperation of network operators and equipment manufacturers. Therefore, when the merging with Internet service is required, the defects of this conventional telecommunication service generating mode appear gradually: the development of new services needs to solve the problems in multi-vendor environment and heterogeneous network, for example, problems in new service provision to users over Public Switched Telephone Network/Intelligent Network (PSTN/lN), mobile communication and World Wide Web. Such a current situation determines that only a few professional developers can create a service, however, for the common service providers, service developers and users, it is very difficult to create a service on their own. So far, there is no environment for developing open telecommunication services based on Internet that users can freely select and participate. A prior art, as in an Chinese patent entitled "Model driven fused service generating method adapt to different interfaces and platform technique" published on May 3^{rd}, 2006 with the publication number of CN1767537A, discloses that by establishing mapping relationship from a general service model to a relative model of specific interface technology, a relative model of platform implementation technology and implementation codes of specific programming languages, the technical solution provided by this patent enhances the portability between different API interface technologies and different platform implementation technologies during the merging process of telecommunication and Internet, and improves the development efficiency of new telecommunication services, but cannot provide environment for developing open telecommunication service for Internet or make it possible for service providers, service developers and users to independently generate value-added telecommunication services in a flexible and convenient way. Another prior art, as in an US patent entitled "Service creation and provision using a java environment with a set of APls for integrated networks called JAIN and a set of recommendations called the PARLAY API's", published on March 4^{th}, 2004 with the publication number of US 20040044726, discloses that the telecommunication service are developed by calling JAIN and PARLAY API in JAVA environment. In fact, with further abstraction or simplification of open service architecture specifications, the conventional specifications, such as PARLAY and the like, cannot meet the requirements of the new generation telecommunication network service development on efficiency and flexibility, especially for achieving the development of value-added service to various services on Internet platform.

### SUMMARY

The technical problem to be solved by the present invention is to overcome the deficiency of the prior art and provide a system and method, which are convenient, flexible and can be participated by users freely, for generating open telecommunication services based on Internet.

The technical solution used by the present invention to solve the technical problem is as follows.

A system for generating an open telecommunication service based on Internet, which comprises an operating interface and a running container; wherein
the operating interface is used for receiving a service from the Internet and providing a running mode of a background system for a client;
the running container is used for generating a telecommunication service according to the service received by the operating interface, which comprises a service access module, a service generation module and a service release module; wherein
the service access module is used for acquiring the service from the operating interface and generating a service description file according to the service description information carried by the service,
the service generation module is used for parsing the service description file generated by the service access module into a serving node and drawing the serving node into a corresponding service flow for uniform encapsulation,
the service release module is used for releasing the telecommunication service uniformly encapsulated in the service generation module.

The operating interface may comprise an Internet application framework installed in the client, which is used for supporting operations of service access, service generation and service release through human-computer interaction.

The service generation module may comprise a flow drawing component library, which is used for setting the serving node as an independent graphic mark and compiling the serving node into the corresponding service flow by dragging the graphic mark.

The running container may further comprise a service search module, which is used for searching for the service on a site or Internet and importing the service that being found out into the service access module.

The running container is arranged in the background system.

A method for generating an open telecommunication service based on Internet, which comprises the following steps:
A, receiving a request for generating a telecommunication service of a client;
B, acquiring a service by the client through Internet and making the service access to a background system;
C, generating a corresponding telecommunication service by the service accessed to the background system and encapsulating the telecommunication service; and
D, releasing the encapsulated telecommunication service by the client.

The operation of generating the corresponding telecommunication service may be achieved by a component in a flow drawing component library; and
the flow drawing component library may comprise at least one component of a flow property, a vector line, an operating node, a timer node and a routing condition.
the service in Step B is a standard service, the process of acquiring the service may comprise:
generating a service description file by the received basic service description information according to standard protocol specifications and generating a corresponding calling code automatically; or,
the service in Step B is a non-standard service, the process of acquiring the service may comprise:
generating the service description file by the received basic service description information and calling description information according to standard protocol specifications and receiving a corresponding calling file packet.

In Step C, the process of generating the telecommunication service may comprise:
parsing service description file corresponding to the service accessed to the background system into a serving node, and selecting and applying the component in the flow drawing component library to compile the serving node into a corresponding service flow.

The serving node may be set as an independent graphic mark and compiled by dragging the graphic mark.

The telecommunication service may be a sub-service capable of being called by another service flow.

Step D may comprise:
releasing the generated telecommunication service on Internet in a standard service form.

The service acquired in Step B may comprise a service directly initiated or found by searching on Internet through an operating interface.

The beneficial effect of the present invention is that the system and method for generating the open telecommunication service based on Internet according to the present invention have a simple program and high flexibility, and users such as service developers, service providers and service users and the like, can directly access or find out a service through a human-computer interaction interface and generate the needed value-added telecommunication service in the system. The system and method shield the technologies such as protocol transport, API calling and the like on the floor layer of service generating, so the service generation efficiency and flexibility are effectively improved without the complex and tedious operations of professionals. The system combines the rich service functions of Internet technology with the strong service capabilities of telecommunications to provide value-added services from public networks such as Internet, and directly release them to public networks such as Internet, and improve the user experience and freedom.

### BRIEF DESCRIPTION OF THE DRAWINGS

Fig. 1 is a block diagram showing the structure of a system for generating an open telecommunication service based on Internet according to the present invention;
Fig. 2 shows an interaction model of an operating interface of the system for generating the open telecommunication service based on Internet according to the present invention;
Fig. 3 is a general flowchart of a method for generating the open telecommunication service based on Internet according to the present invention;
Fig. 4 is a flowchart showing the access of a standard service by the method for generating the open telecommunication service based on Internet according to the present invention;
Fig. 5 is a flowchart showing the access of a non-standard service by the method for generating the open telecommunication service based on Internet according to the present invention;
Fig. 6 is a flowchart showing the service generation by the method for generating the open telecommunication service based on Internet according to the present invention; and
Fig. 7 shows an embodiment of a flow drawing component library according to the present invention.

### DETAILED DESCRIPTION

The service in the present invention refers to a standard service released on the site or pubic networks where the system is located, comprising: Web Service, Representational State Transfer Service (REST Service) etc., for example, weather forecasting provided on the official website of the National Meteorological Bureau, network search provided by Google, telecommunication services such as short message and multimedia message developed by ParlayX open interface technology, telecommunication value-added services developed by encapsulating the telecommunication capabilities of conventional Short Message Gateway Protocol/Short Message Peer to Peer (SMGP/SMPP) protocol, and services formed by uniformly releasing the services generated by the system.

The serving node in the present invention is a node in the service generation module in the flow design process, which is abstracted from the underlying service or capability, and represents the calling or execution of the underlying capability or service. However, the representation form such as input, output and the like of a specific node is what the professionals concern and not related to the details of the underlying technology, so that the serving node aims to common service developers and service providers without service development professional knowledge and the service users without the background of telecommunication technology. For example, for the ordinary Application Programming Interface (API) for sending short messages, it is possible to abstract and solidify the underlying API calling details, such as protocol implementation, certification, authentication, rating and other mechanisms, and only take destination number and short message content as an input node and take the sending result as an output node to expose to the service developers, so that sending short messages can be taken as a service and provided to the service personnel for service development. Similarly, for the Web Service of weather forecasting in the field of Internet, it is possible to encapsulate the calling details of Web Service, and only take the city as the input node and take the weather condition as the output node, which is to be abstracted into a service to expose to the service developers. The service developers compile the accessed services by certain inherent mechanisms, such as expression calculation, condition determination, routing connection and the like, provided by the service generation module, to generate new services.

The user in the present invention refers to service providers, service developers and service users and the like, which is not limited to the technical professionals with the capability of telecommunication service development, and further comprising common network users.

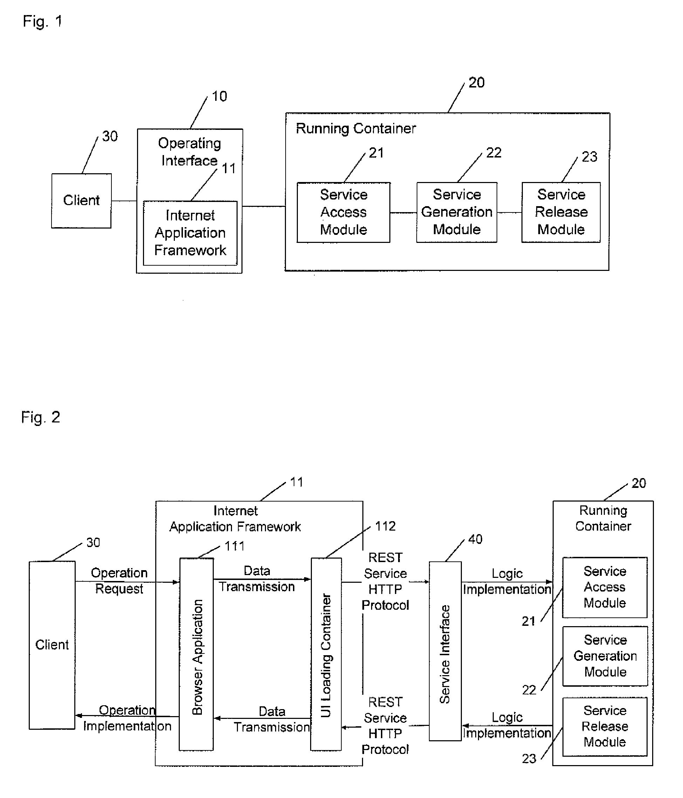

Fig. 1 is a block diagram showing the structure of a system for generating an open telecommunication service based on Internet according to the present invention, wherein the system comprises an operating interface 10 and a running container 20.

Wherein, the operating interface 10 is a human-computer interaction interface installed in client 30 such as a computer, a mobile phone, a personal digital assistant and the like, which is used for receiving services from the Internet in a human-computer interaction mode and providing a running mode of a background system for the client 30, so as to realize the aims of the access, service generation and service release of a self-controlled service. The system for generating the open telecommunication service in the present invention can be released on a site on the Internet, so that the client 30 operated by different users can directly access this site and initiate an operation request of a service, searching a service in this site or public networks and entering service-related information through the operating interface 10; and after data of the operation request is transmitted into the running container 20 of the background system, the client 30 can generate customized services through the operating interface 10 by using various functional modules in the background system, and release the services. Compared with the conventional systems for generating telecommunication services, the present invention can realize the service access, service generation and release independently without the need of the complex service generation environments, service generation tools and running flows provided by the professional telecommunication service developers, so as to facilitate the free participation of various users.

The running container 20 is arranged in the background system of a telecommunication network, which is used for acquiring the service from the operating interface 10 to generate the customized value-added telecommunication service, the running container 20 comprises a service access module 21, a service generation module 22 and a service release module 23.

Wherein, the service access module 21 is used for acquiring the service from the operating interface 10 and generating a service description file by relative service description information carried by the service according to standard protocol specification; the service generation module 22 is used for parsing the service description file generated by the service access module 21 into a serving node, drawing the serving node into a service flow and saving the service flow to generate a customized value-added telecommunication service, and uniformly encapsulating the value-added telecommunication service; the service release module 23 is used for releasing the telecommunication service uniformly encapsulated in the service generation module 22, for example, releasing on public networks such as Internet and the like.

The running container 20 of the present invention may further comprise a service search module which can be used for searching for the existing service on a site or public networks such as Internet, and importing the found service into the service access module 21 to make the service access module 21 generate the telecommunication service.

Fig. 2 shows an interaction model of an operating interface of the system for generating the open telecommunication service based on Internet according to the present invention, the operating interface 10 may comprise an Internet application framework 11 which is used for implementing the operations of service access, service generation and service release through human-computer interaction. The Internet application framework 11 provides a browser application 111 developed by using standard HyperText Mark-up Language (HTML) and a user-defined tag, which is stored on a site in the HTML format, and further provides a UI loading container 112, i.e. a User Interface (UI) loading container, which can be implemented by JavaScript client script language and is used for parsing user-defined tag into standard HTML tag. The client 30 can access public networks such as Internet and the like through the operating interface 10 and visit the site where the system is located through the browser application 111, and can download the browser application 111 and the UI loading container 112 to the local by using an HTTP request. The UI loading container 112 parses the user-defined tag in the browser into the standard HTML tag and combines the tags with other standard HTML tags so as to present before the client 30. The client 30 can directly initiate a service through the operation request in the browser application 111 or search for the existing services on public networks such as Internet and the like, and enter service description information or other relative information; the UI loading container 112 encapsulates the operation request and data into a standard calling request, and calls applications of each functional module exposed in the REST service architecture mode on the site where the system is located through a service interface 40, the functional modules are all arranged in the running container 20.

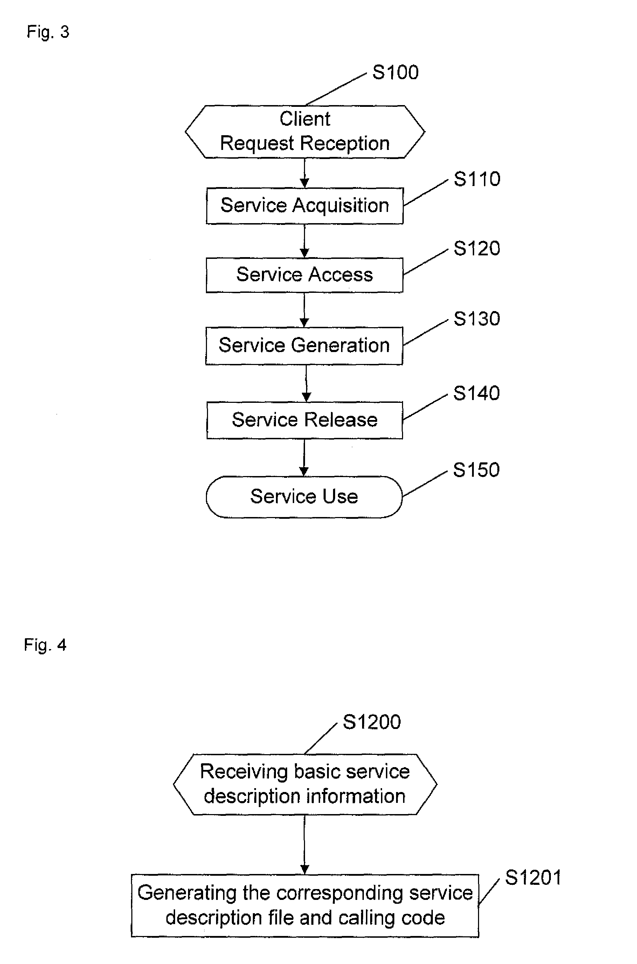

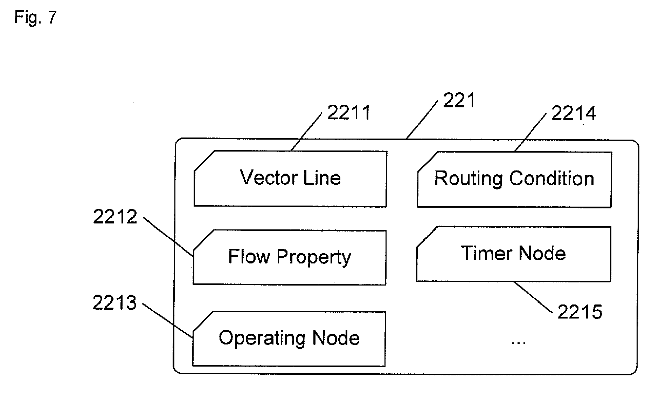

Fig. 3 is a general flowchart of a method for generating the open telecommunication service based on Internet according to the present invention, comprising the following steps:
Step S100: a system receives a request for generating a telecommunication service from client 30, which is operated by the user mentioned in the present invention.
Step S110: the client 30 aquires a service through public networks such as Internet and the like, wherein the service may comprise a service directly initiated by users such as service providers and the like who accessing the site where the system is located through public networks, and may further comprise a service found on the site or public networks such as Internet and the like through the service search module when users such as service developers or service users and the like accessing the site where the system is located.
Step S120: a service access module 21 makes the acquired service access to a background system , wherein the service may comprise a standard service and a non-standard service, and the passing and calling mode of parameters such as input and output of services are described in standard XML,.
Step S130: a flow drawing component library 221 as shown in Fig. 7 has been set up in the background system in advance, which comprising at least one of a flow property, a vector line, an operating node, a timer node, a routing condition, etc. and is arranged in the service generation module 22. In this step, in the service generation module 22, the corresponding telecommunication service is generated from the service accessed to the background system through a component in the flow drawing component library 221 and the telecommunication service is encapsulated. The encapsulation refers to that, after a service is generated, for the purpose of convenient use or calling from outside, the service is uniformly adapted and packaged by the system, so that there is a uniform and standard interface for the use or calling of the service from outside. For example, if a service of searching for weather forecasting is generated through the process above of the apparatus, after the service is generated, the system automatically generates an API or Web service interface: getWeather, for calling the service, and the service can be used or called by using the uniformly encapsulated interface.
Step S140: the client 30 releases the encapsulated telecommunication service through a service release module 23, for example, releases on public networks such as Internet in a standard form.
Step S150: the service users can directly use the open service of the system exposed on public networks such as Internet, and can also import the service into their own development environments for secondary development.

Wherein, the service accessing step described in Step S120 can access various services in many heterogeneous networks to the system, and the accessing modes for standard service and non-standard service are approximately different.

As shown in Fig. 4, a standard service provided in the mode of WEB Service, REST Service and Java Messaging Service (JMS) and the like can be accessed to the system through the steps below:
Step S1200: the client 30 enters basic service description information necessary for service access through an Internet application framework 11, the basic service description information may be, for example, one or more information of a service address, a service type, an input parameter list, an output parameter list, a service description, a service provider and the like, and the service access module 21 receives the information. The input parameter list contains zero or more input items each containing the descriptions such as a parameter name and a parameter type, etc. The output parameter list contains zero or more output items each containing the descriptions such as a parameter name and a parameter type, etc.
Step S1201: after receiving the service description information entered by the client 30, the service access module 21 generates a corresponding service description file according to standard protocols and automatically generates calling codes for the services.

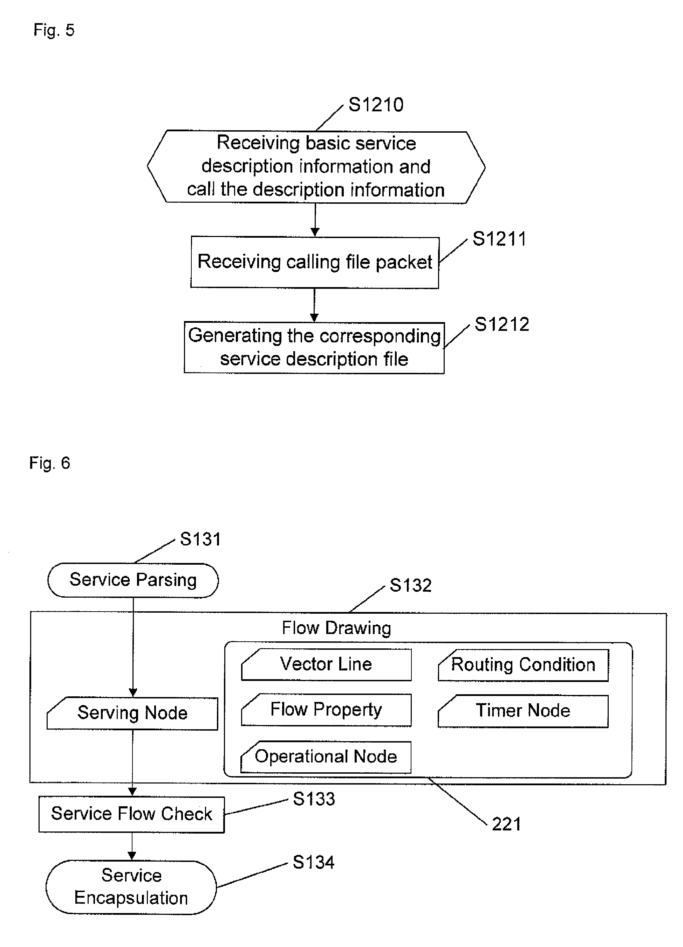

As shown in Fig.5, a non-standard service provided in the mode of Java Archive (JAR) file packet generated and developed by using JAVA language or Dynamic Linkable Library (DLL) file generated and developed by using C language and the like can be accessed to the system by the steps below:
Step S1210: the client 30 enters basic service description information necessary for service access and calling description information such as service calling mode and service calling entry and the like through the Internet application framework 11, and the service access module 21 receives the information. The service calling mode defines the mode use for calling the capabilities, for example, the method provided by calling JAVA type in the JAR packet or the method implemented by C language in DLL. The calling entry describes the entry for calling. For example, for the JAVA calling, the full type name and method name are provided.
Step S1211: the client 30 further need to upload the calling file packet such as the JAR packet or DLL file and the like to the system through the Internet application framework 11, and the service access module 21 receives the information.
Step S1212: after receiving the service description information entered by the client 30, the service access module generates the corresponding service description file.

Fig. 6 is a flowchart showing the service generation by the method for generating the open telecommunication service based on Internet according to the present invention, comprising the following steps:
Step S131: the service description file generated by the service access module 21 is parsed into the serving node by the service generation module 22.
Step S132: adopting the flow drawing component to compile the serving node into the corresponding service flow; and the service generation module 22 can provide graphic flow drawing component, at this time, the serving node is set as an independent graphic mark, and the service generator compiles the original sub-serving nodes in graphic dragging mode and generates the customized telecommunication service by simple operation, timing and routing mechanism.
Step S133: the flow can be checked during saving through the service flow drawn by the component in the flow drawing component library 221, so as to examine the grammar correctness of flow, and only the correct service flow can be saved after the check; in addition, help mechanisms can be provided, comprising online documentation or suspended tips, etc.
Step S134: the generated services are uniformly encapsulated and adapted.

The service generation module 22 can further search the sub-service generated and released on the site and import the sub-service as own flows of the service generation module 22 for edition.

Fig. 7 shows an embodiment of a flow drawing component library according to the present invention, comprising basic units forming the flow drawing component, such as a vector line 2211, a flow property 2212, an operating node 2213, a routing condition 2214, a timer node 2215 and the like.

Wherein, the flow property 2212 contains flow input parameters, flow output parameters and flow variables, wherein the input parameters and output parameters of the flow can be bound to the flow variables; and the inputs of serving nodes can be fixed values entered by the client 30 or transferred in by the flow variables. The outputs of serving nodes must be bound to the flow variables. The operating node 2213 can represent the calculation of flow variables and the results after calculation are still assigned to the flow variables.

The timer node 2215 can represent a mechanism of flow timing execution.

The vector line 2221 represents the routing relationship among serving nodes, and the arrow direction of the vector line 2221 represents the executing sequence for the nodes. A node can be in line relationship with multiple nodes in the same time. In addition, the routing condition 2214 which is a Boolean expression consisting of Boolean type flow variables can be set on the line and used for expressing whether to execute the next serving node in the vector direction of the line after the execution of a node.

The system and method for generating the open telecommunication service based on Internet according to the present invention have a simple program and high flexibility, and users such as service developers, service providers and service users and the like can directly access or find out services through a human-computer interaction interface and generate the needed value-added telecommunication service in the system, so the service generation efficiency and flexibility are effectively improved without the complex and tedious operations of professionals. The present invention can conveniently use the telecommunication capabilities, and combine the emerging services or technologies such as social network, network video, intelligent search, converged technology, artificial intelligence, grid computing and the like in the fields of public networks such as Internet and the like, to combine the rich and strong service generating capabilities of public networks such as Internet and the like with the telecommunication capabilities by using the strong service and content generation resources on the public networks such as Internet and the like, so as to make the generation of the service comes from public networks such as Internet and the like, and release the service onto them. Therefore, it is able to comply with the technology development trend of network convergence and the theme of telecommunication service development with the characteristics of user selection, experience, participation, etc. The development trend of new generation service networks driven by users for user free access, free service selection, free charge selection, and even free service generation is met.

The above are the further descriptions of the present invention with reference to the specific preferred embodiments, and it can be understood that the specific embodiments of the present invention are not limited to such. Various simple derivations or replacements can be made by those skilled in the art within the concept of the present invention and pertain to the scope of protection of the present invention.

## Claims

1. A system for generating an open telecommunication service based on Internet, comprising: an operating interface and a running container, wherein
the operating interface is used for receiving a service from Internet and providing a running mode of a background system for a client; and
the running container is used for generating a telecommunication service according to the service received by the operating interface, and comprises a service access module, a service generation module and a service release module, wherein
the service access module is used for acquiring the service from the operating interface and generating a service description file according to the service description information carried by the service,
the service generation module is used for parsing the service description file generated by the service access module into a serving node and drawing the serving node into a corresponding service flow for uniform encapsulation, and
the service release module is used for releasing the telecommunication service uniformly encapsulated in the service generation module.

2. The system according to claim 1, wherein the operating interface comprises an Internet application framework installed in the client, which is used for supporting operations of service access, service generation and service release through human-computer interaction.

3. The system according to claim 1, wherein the service generation module comprise a flow drawing component library, which is used for setting the serving node as an independent graphic mark and compiling the serving node into the corresponding service flow by dragging the graphic mark.

4. The system according to any one of claims 1 to 3, wherein the running container further comprises a service search module, which is used for searching for the service on a site or Internet and importing the service that being found out into the service access module.

5. The system according to claim 1, wherein the running container is arranged in the background system.

6. A method for generating an open telecommunication service based on Internet, comprising the following steps:
A, receiving a request for generating a telecommunication service of a client;
B, acquiring a service by the client through Internet and making the service access to a background system;
C, generating a corresponding telecommunication service by the service accessed to the background system and encapsulating the telecommunication service; and
D, releasing the encapsulated telecommunication service by the client.

7. The method according to claim 6, wherein the operation of generating the corresponding telecommunication service is achieved by a component in a flow drawing component library; and
the flow drawing component library comprises at least one component of a flow property, a vector line, an operating node, a timer node and a routing condition.

8. The method according to claim 6 or 7, wherein
the service in Step B is a standard service, the process of acquiring the service comprises:
generating a service description file by the received basic service description information according to standard protocol specifications and generating a corresponding calling code automatically; or
the service in Step B is a non-standard service, the process of acquiring the service comprises:
generating the service description file by the received basic service description information and calling description information according to standard protocol specifications and receiving a corresponding calling file packet.

9. The method according to claim 8, wherein in Step C, the process of generating the telecommunication service comprises:
parsing service description file corresponding to the service accessed to the background system into a serving node, and selecting and applying the component in the flow drawing component library to compile the serving node into a corresponding service flow.

10. The method according to claim 9, wherein the serving node is set as an independent graphic mark and compiled by dragging the graphic mark.

11. The method according to claim 6, wherein the telecommunication service is a sub-service capable of being called by another service flow.

12. The method according to claim 6, wherein Step D comprises:
releasing the generated telecommunication service on the Internet in a standard service form.

13. The method according to claim 6, wherein the service acquired in Step B comprises a service directly initiated or found by searching on the Internet through an operating interface.
